# EUROPEAN PATENT SPECIFICATION

(11) **EP 1 502 797 B1**
(45) Date of publication and mention of the grant of the patent: **14.06.2006**
(21) Application number: 04017157.1
(22) Date of filing: 21.07.2004
(51) Int. Cl.: B60K 17/04

(54) **A drop-centre axle, in particular for low-floor city bus**
Tiefliegende Achse, insbesondere für Niederflurstadtbus
Essieu abaissé, en particulier pour autobus urbain à plate-forme surbaissée

(30) Priority: 30.07.2003 IT TO20030587
(43) Date of publication of application: 02.02.2005
(73) Proprietor: GRAZIANO TRASMISSIONI S.p.A., I-10090 Cascine Vica-Rivoli (Torino) (IT)
(72) Inventor: Bologna, Luciano, 10098 Rivoli (Torino) (IT); Sorbini, Riccardo, 10090 Cascine Vica Rivoli (Torino) (IT)
(74) Representative: Quinterno, Giuseppe

(56) References cited:
- EP-A- 0 877 672
- DE-A- 3 640 947
- DE-C- 443 540
- FR-A- 940 078
- GB-A- 759 760

## Description

The present invention relates to an axle for a motor vehicle, of a so-called drop-centre type, in particular for a low-floor city bus.

More specifically, the subject of the invention is an axle of a type comprising
a rigid axle casing or box, including an intermediate tubular portion and two axle box end portions,
two wheel-bearing assemblies, each for fixing to the disc portion of a respective wheel and including respective shafts or axles supported for rotation in a respective axle box end portion of the axle box or casing, and
a differential gear mounted in the said axle box or casing near an axle box end portion and operable to transmit drive torque from a drive shaft to two half-shafts, each of which is coupled to a corresponding wheel-bearing assembly by means of a respective reduction gear, mounted in one or other terminal box portion of the axle casing or box.

Axles of this drop-centre type have been used widely for several decades, since their use in buses makes it possible to lower the floor significantly. At first, use of this type of axle was particularly appreciated in double decker buses, the best known examples of these being the buses which have long been used in Britain, and especially in London. It was important with this type of bus to find arrangements which made it possible to lower the centre of gravity, thereby making the vehicle more stable when moving.

A drop-centre axle of this type, with drum brakes, is described, for example, in the British patent 759,760.

Towards 1980, other bus manufacturers in continental Europe started to introduce low-floor buses, some 500-600mm from the road surface, while in the next decade this dropped to some 350mm from the ground. This second height from the ground of the platform has become a European standard for urban buses.

The main reason that drop-centre axles, and the low floors made possible thereby, are so popular is that they make it far easier to get on or off the bus, a fact which is especially appreciated by elderly people and by those who are physically disabled, and therefore reduce the time a bus needs to stop at a bus stop.

From about 1995 disc brakes began to be used on drop-centre axles. The use of drum brakes has become marginal and is expected to be discontinued, with pneumatically controlled disc brakes taking over completely in the next few years.

A typical configuration of a drop-centre axle with disc brakes is described in the European Patent EP 0877 672-B1.

With a drop-centre axle with drum brakes there were no size restrictions (in terms of the outer diameter) on the driven wheel of the reduction gear between the wheel bearing shaft and the differential gear. This made it easier to design the axle, in particular with regard to the dimensions of the wheelbase, this being one of the main reference parameters when deciding on its use in a bus.

With the advent of pneumatically controlled disc brakes, the reduction gears between the wheel-bearing shafts and the differential half-shafts have the brake callipers above them, which restricts the maximum dimension of the driven gear on the wheel shaft.

In a drop-centre axle, the use of disc brakes leads inevitably to a reduction in diameter of the said gear wheel and to a reduction in the size of the inter-axle space (the distance between the half-shafts linked to the differential and the wheel shafts), going against the wishes of bus manufacturers who want to make the floor of the bus as close to the ground as possible.

One object of the present invention is to provide a structure for a drop-centre axle of the type described above, which makes it possible to lower the upper wall of the axle casing or box significantly, without any need either for a corresponding reduction in ground clearance or for a reduction in the transverse width of the useful space between the two terminal box portions of the axle casing or box.

This and other objects are achieved according to the invention by providing a drop-centre axle of the type specified above, characterised in that each of the aforesaid reduction gears includes
an intermediate shaft, arranged at an intermediate height between the shaft of the wheel-bearing assembly and the differential half-shaft,
a first reduction stage, between one differential half-shaft and the intermediate shaft, and
a second reduction stage, between the said intermediate shaft and the shaft of the corresponding wheel-bearing assembly;
each reduction gear being manufactured and arranged in such a way that, in conditions of use and with their respective supports on the side of the wheel, the intermediate shaft and the second reduction stage extend at least partially into the space between the disc portion and the inner edge of the wheel rim.

According to a further characteristic, the first reduction stage of the reduction gear nearest the differential includes an input gear carried by the corresponding differential half-shaft and supported for rotation in the axle casing or box by a first or second bearing, facing either the nearest wheel or away from it respectively, and the differential gear includes a planet-carrier supported for rotation in the axle casing or box by means of third and fourth bearings, again facing one towards and one away from the nearest wheel respectively, the second and third bearings interpenetrating each other axially.

Further characteristics and advantages of the invention will become apparent from the detailed description which follows, provided purely by way of non-limitative example, with reference to the appended drawings, in which:
Figure 1 is a front elevation view of a drop-centre axle according to the present invention;
Figure 2 is a section, essentially taken on the line II-II of Figure 1;
Figure 3 is a sectioned partial elevation of an end portion of the axle of the preceding drawings;
Figure 4 is a sectioned view showing a portion of Figure 3, indicated by the arrow IV on an enlarged scale;
Figure 5 is a partial, sectioned view of a partial variant of the wheel-bearing assemblies in an axle according to the invention;
Figure 6 is a partial view, sectioned essentially along the line VI-VI of Figure 1; and
Figure 7 is a partial, sectioned view along the line VII-VII of Figure 6.

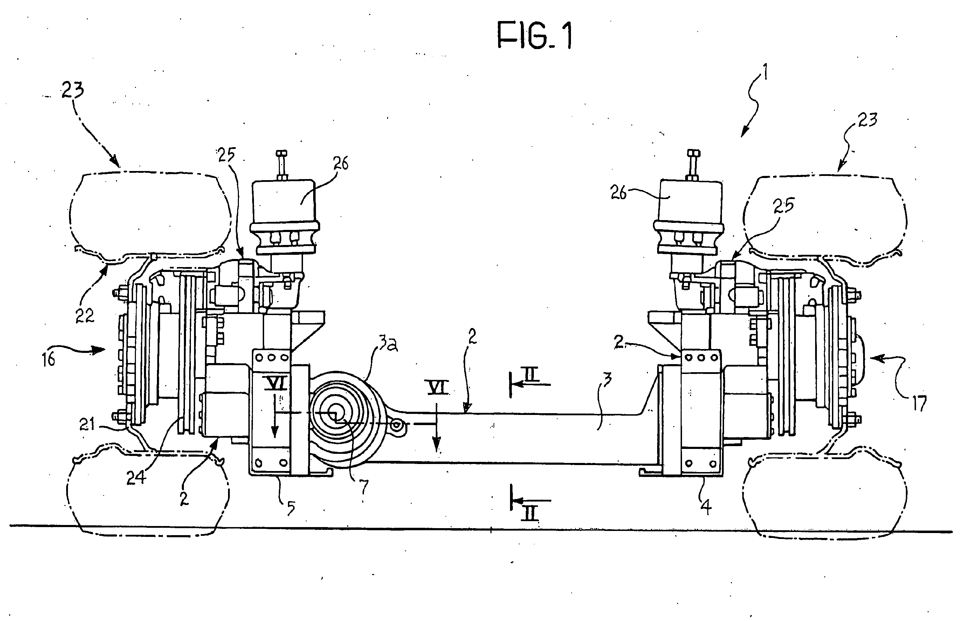

In Figure 1, a drop-centre axle according to the present invention is indicated 1.

This axle includes a rigid support casing or box, generally indicated 2.

This axle box 2 includes an intermediate tubular portion 3 with its opposite ends connected to corresponding axle box end portions 4 and 5.

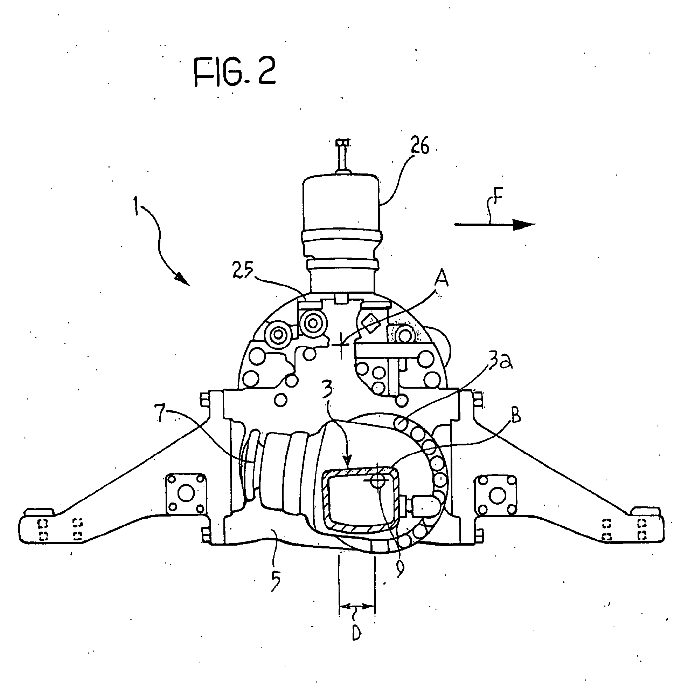

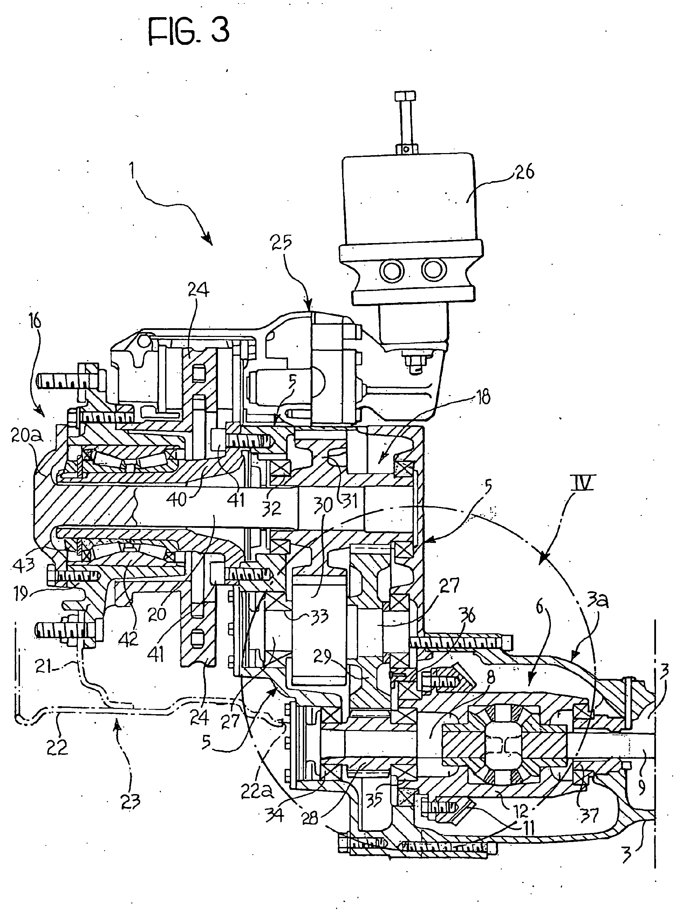

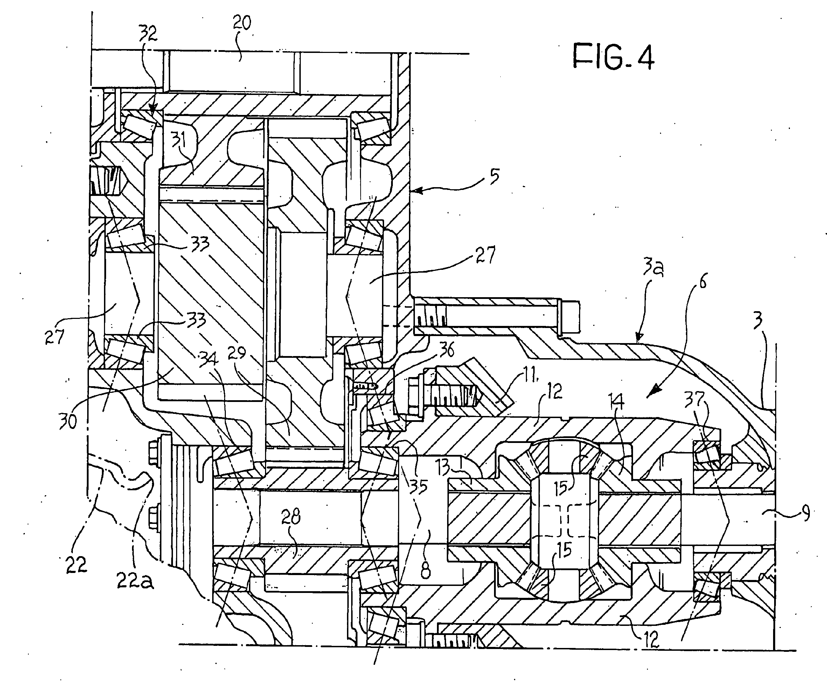

The axle 1 includes a differential gear, generally indicated 6 in Figures 3 and 4. This differential gear is housed in an enlarged portion 3a of the intermediate portion 3 of the axle casing or box, adjacent the axle box end portion 5. The differential gear 6 is operable to share drive torque delivered from a drive member 7 (see Figures 1, 2, 6 and 7) to two half-shafts 8 and 9 (see Figures 2-4 and 7).

The drive member 7 is intended to be coupled for operation to a propulsion unit (not shown) by means of a transmission shaft (not shown either).

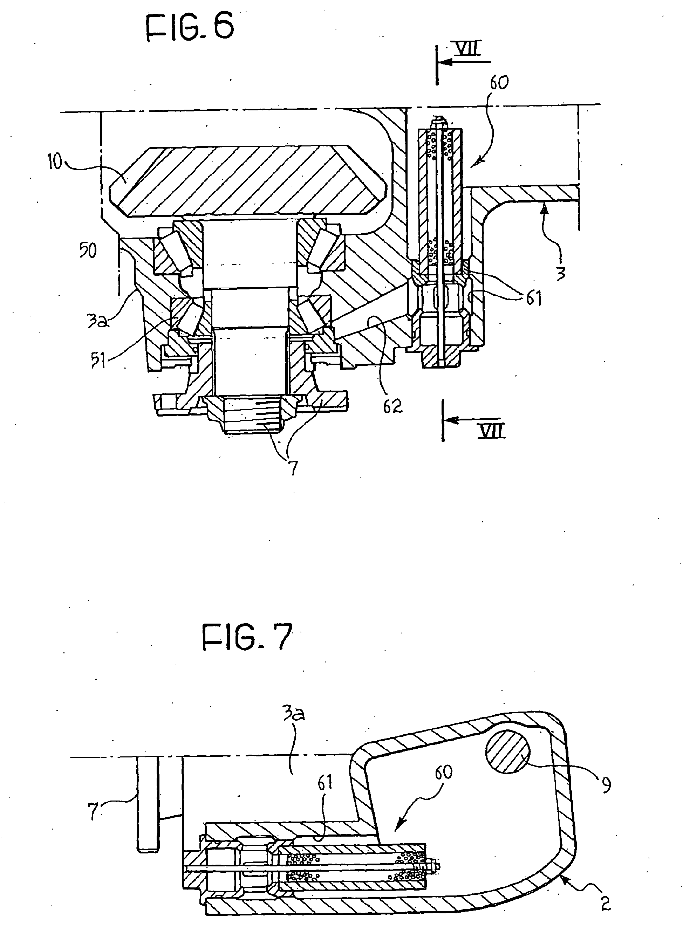

In the embodiment shown in the drawings, the said drive member 7 is coupled for rotation with a bevel pinion 10 (Figure 6) operable to engage with a crown wheel 11 secured to the planet-carrier 12 of the differential 6 and coaxial with the half-shaft 8 (See Figures 3 and 4).

In a manner which is known per se, respective gear wheels or planets 13 and 14 are fitted onto the half-shafts 8 and 9, which mesh with bevel pinions or planets 15 (see Figure 4).

The half-shafts 8 and 9 of the differential gear 6 are each coupled to a corresponding wheel-bearing 16 and 17 (see Figure 1) by means of respective reduction gears mounted in the one or the other axle box end portion 4 or 5 respectively, of the axle support casing or box 2. The wheel-bearing assembly 16 is shown in detail in the drawings, along with the associated reduction gear, generally indicated 18. The structure of the wheel-bearing assembly 17 and its associated reduction gear are the same.

Hereinafter, therefore, only the wheel-bearing assembly 16 and its associated reduction gear 18 will be described.

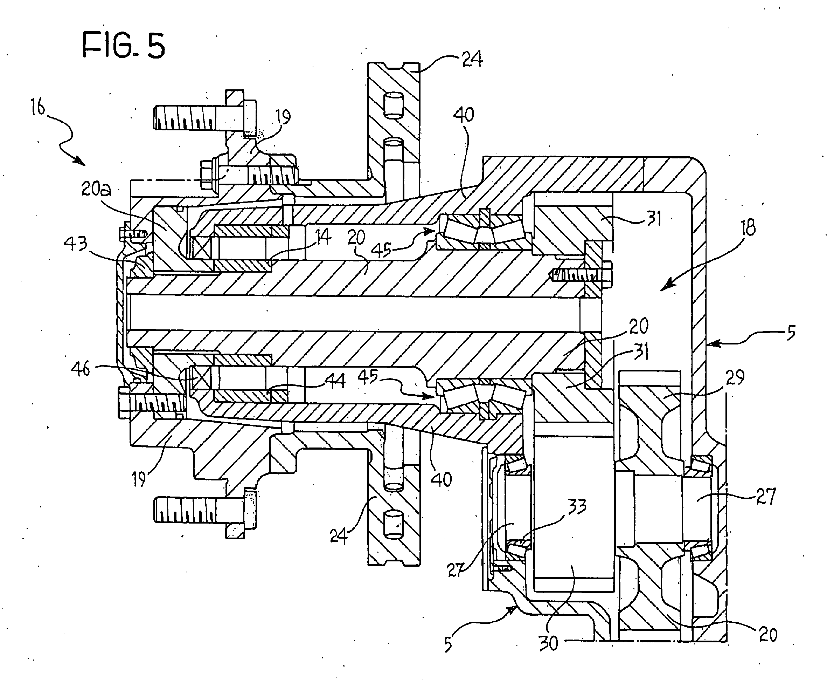

The wheel-bearing assembly 16 includes a hub 19 connected to a wheel shaft or axle 20 (see Figures 3 and 5) and fixable (see Figures 1 and 3) to a disc portion 21 of a respective rim 22 of a wheel 23.

A single wheel or a pair of twin wheels can be coupled to the hub 19 of each wheel-bearing assembly. A brake disc 24 (see Figures 1, 3 and 5) is fixed to the hub 19, along with an associated calliper 25, controlled by a pneumatic cylinder 26.

In a drop-centre axle according to the invention, each reduction gear 18 includes an intermediate shaft 27 (see Figures 3 to 5) disposed at a height which is intermediate between the shaft or axle 20 of the corresponding wheel-bearing assembly and the associated half-shaft of the differential gear 6.

Each reduction gear, for example the reduction gear 18 shown in the drawings, includes a first reduction stage between the half-shaft 8 or 9 of the differential gear 6 and the intermediate shaft 27 and a second reduction gear between this intermediate shaft 27 and the shaft or axle 20 of the corresponding wheel-bearing assembly 16 or 17.

In the embodiment illustrated, the first reduction stage includes a gear wheel 28 carried on the half-shaft 8 for meshing with a gear wheel 29 carried by the intermediate shaft 27.

The second reduction stage includes a gear wheel 30, carried in an axially offset position on the intermediate shaft 27 and meshing with a gear wheel 31 carried on the corresponding shaft or axle 20 of the wheel-bearing assembly 16.

Thanks to the use of a two-stage reduction gear, in the axle 1 of the invention the central portion is significantly lower than in the prior art drop-centre axles. When used in a bus, this means that the floor of the bus can be correspondingly lower.

It is convenient, in order to prevent the adoption of a multiple stage reduction gear from restricting the transverse useful space between opposite ends of the axle, if each reduction gear 18 in the axle 1 of the invention is constructed and positioned in such a way that, in use, the intermediate shaft 27, and the second reduction stage 30, 31, along with the associated supports 32 and 33 (see Figures 3 and 4) arranged on the side facing the wheel, extend at least partially into the space between the disc portion 21 and the inner edge 22a of the wheel rim 22. By moving the reduction gear partly into the space inside the wheel 23 it is possible to compensate for the reduction in free transverse space which would otherwise result from using a reduction gear with multiple stages.

The gear 28 of the first reduction stage, carried by the half-shaft 8 of the differential gear 6, is supported for rotation in the axle casing or box by means of two roller bearings 34 and 35, in a so-called X configuration (see Figure 4).

The planet-carrier 12 of the differential gear 6 is itself supported for rotation in the axle casing or box by two roller bearings 36 and 37, conveniently oriented the same way, that is with their tapers facing the same way, particularly on opposite sides of the wheel (see Figure 4 in particular). The bearing 35 conveniently axially interpenetrates the planet-carrier 12 of the differential gear 6 and is also interpenetrated axially by the bearing 36. This arrangement helps to increase the transverse space available between the ends of the drive axle.

The axle of the invention is intended in particular for use as the rear axle of a motor vehicle with a propulsion unit positioned behind this axle and coupled to the drive member 7 by means of a control shaft (not shown in the drawings).

It is convenient if the reduction gears 18 of the axle 1 are made in such a way that the half-shafts 8, 9 of the reduction gear are off-set forwardly, along the direction of forward movement of the vehicle shown by the arrow F in Figure 2, that is on the other side of the propulsion unit from the wheel shafts or axles 20. This can be appreciated from Figure 2, for example, where A indicates the centre line of the axis 20 of the wheels, B indicates the centre line of the axes of the half-shafts 8, 9 of the differential gear and D indicates the extent of forward displacement of the axis B relative to the axis A.

This configuration makes it possible to reduce the inclination of the propulsion unit and to lengthen the transmission shaft between this latter and the differential gear 6 of the axle 1. In particular, this makes it possible to at least partially improve the working angle of this transmission shaft, which would otherwise tend to be detrimentally affected by lowering of the central portion of the axle.

The axle of the invention also provides similar benefits in motor vehicles with a central engine (between the front and back axles). In this case, the drive member 7 faces forwardly and the half-shafts 8, 9 are offset rearwardly with respect to the axis A.

As described earlier, the axle of the invention makes it possible to lower the central portion of the axle, including the differential gear. In order to prevent this lowering from translating into a corresponding reduction in ground clearance, the dimensions of the differential gear must be smaller than in prior art axles. The fact that the differential gear 18 is of a two-stage type makes this possible. For example, if in a known drop-centre axle the reduction ratio achieved by each reduction gear is around 3, and the reduction ratio achieved by the differential gear is, for example, between 1.25 and 1.85 in a drop-centre axle according to the present invention the reduction ratio achieved by the two-stage reduction gear is about 4, for example, (or an increase of about 30%) and the ratio achieved by the differential gear is down to about 1.1 -1.3 (an improvement of about 30%).

The reduced reduction ratio means that less torque passes through the conic coupling and the differential gear, and these components can therefore be smaller.

Figure 3 shows a wheel-bearing assembly 16 which has a singularly unconventional structure, considering the use for which it is intended. In this arrangement, the wheel-bearing assembly includes a tubular support element 40 fixed to the adjacent axle box end portion 5 of the axle box by means of screws 41.

The wheel shaft or axle 20 is shaped basically like a mushroom and has a head 20a with the wheel-bearing hub 19 fixed thereto. A so-called bearing "unit" 42 is force-fitted into the wheel-bearing hub 19 and slidably mounted on the tubular support element 40.

The bearing unit 42 is secured axially by means of a ring unit 43, screwed onto the outer end portion of the tubular support element 40.

The wheel-bearing assembly 16 described above with reference to Figure 3 has the disadvantage that when access to the disc brake 24 is needed, in order periodically to replace it for example, it is necessary to remove the entire wheel-bearing hub 19 along with the bearing unit 42. On the one hand, this make the operation more lengthy, since once the hub is fitted back the bearing unit 42 must be secured axially once again, on the other it carries a risk of "polluting" the inside of the axle.

Figure 5 shows a variant of the wheel-bearing assembly, usable in particular for "heavy" axles.

In Figure 5, parts and elements which have already been described have been given the same reference numerals.

In the embodiment of Figure 5, the wheel-bearing assembly 16 also includes a tubular support element 40 secured to the axle casing or box with the wheel shaft or axle 20 rotatable within it.

A first bearing 44, for resisting predominantly radial stress, and a double bearing 45, with two series of rollers inclined in a so-called O configuration, are interposed between the tubular support element 40 and the wheel shaft 20. In operation, this double bearing 45 is mainly intended to resist stress deriving from the gear wheel 31 and axial stresses caused by the tyre.

The bearing 44 is, for example, a barrel roller bearing, and is disposed on the end of the wheel shaft or axle 20 towards the wheel itself, while the double bearing 45 is disposed on the opposite end.

A sealing ring, indicated 46, is fitted on the end of the tubular support element 40 towards the wheel, transversely outwardly of the bearings 44 and 45 and bearing on the outer surface of a head element 20a, secured for rotation with the wheel shaft or axle 20.

With the arrangement described above with reference to Figure 5, in order to access and/or replace the brake disc 24 one need only uncouple the wheel-bearing hub 19 from its associated wheel shaft or axle 20, without needing to manipulate the support bearings 44 and 45 or the associated sealing means. This reduces the time required for the operation, eliminates the need to refit, recalibrate and secure the bearings supporting the wheel shaft or axle 20 and rules out the possibility of polluting the inside of the axle, thanks to the sealing ring 46 which provides an effective barrier.

With reference to Figures 6 and 7, the bevel pinion 10 is supported for rotation in the axle casing or box 3, 3a by means of two roller bearings 50, 51 having a so-called "O" configuration (see Figure 6). In Figures 6 and 7, 60 indicates a filter for the axle lubricating oil, removably inserted into a seat 61 formed in the axle casing or box 3 near the pinion 10 and intersecting a duct 62 for draining the lubricating oil from the bearings 50, 51 of the bevel pinion 10.

The filter 60 can be a metal mesh filter, for example, or a magnetic filter, operable to filter the lubricating oil continuously, thereby ensuring that it is clean and remains effective longer, complying with the user's desire not to have to change the oil too frequently. This also reduces and spreads the cost of the lubricant.

Naturally, the principle of the invention remaining unchanged, embodiments and manufacturing details may vary widely from those described and illustrated purely by way of non-limitative example, without departing thereby from the scope of the invention, as claimed in the appended Claims.

## Claims

1. A drop-centre axle (1) in particular for a low-floor city bus, including
a rigid axle casing or box (2), including an intermediate tubular portion (3) and first and second axle box end portions (4, 5),
first and second wheel-bearing assemblies (16, 17), each of which can be fitted to a disc portion (21) of a respective rim (22) of a wheel (23) and including respective shafts or axles (20) supported for rotation in the said first and said second axle box end portions (4, 5) respectively of the axle casing or box (2), and
a differential gear (6) mounted in the said axle casing or box (2) adjacent one of the axle box end portions (5) thereof and operable to divide drive torque from a drive member (7) between two half-shafts (8, 9), each coupled to a corresponding wheel-bearing assembly (16, 17) by means of respective reduction gears (18) mounted in one and the other axle box end portions (4, 5) respectively of the axle casing or box (2);
the axle (1) being **characterised in that** each of the said reduction gears (18) includes
an intermediate shaft (27) arranged at a vertically intermediate position between the half-shaft (8, 9) of the differential gear (6) and the shaft or axle (20) of the wheel-bearing assembly (16, 17),
a first reduction stage (28, 29) between a half-shaft (8, 9) of the differential gear (6) and the intermediate shaft (27), and
a second reduction stage (30, 31) between the said intermediate shaft (27) and the shaft or axis (20) of the corresponding wheel-bearing assembly (16, 17);
each reduction gear (18) being constructed and positioned in such a way that, in use, the said intermediate shaft (27) and the second reduction stage (30, 31) and their associated wheel-side supports (32, 33) extend at least in part into the volume defined between the disc portion (21) and the inner edge (22a) of the rim (22) of the corresponding wheel (23).

2. A drop-centre axle according to Claim 1, in which the first reduction stage includes an input gear (28) carried by a half-shaft (8, 9) of the differential gear (6) and supported for rotation in the axle casing or box (3, 5) by means of first and second bearings (34, 35) respectively which face towards and away from the wheel (23) respectively, and in which the differential gear (6) includes a planet-carrier (12) supported for rotation in the axle casing or box (3, 5) by means of third and fourth bearings (36, 37) also facing one towards and one away from the wheel (23) respectively; the said second and third bearings (35, 36) interpenetrating each other axially.

3. A drop-centre axle according to Claim 2, in which the said second bearing (35) axially interpenetrates the planet-carrier (12) of the differential gear (6).

4. A drop-centre axle according to Claims 2 or 3, in which the said third and fourth bearings (36, 37) are roller bearings having the same orientation, that is their respective tapers face the same way (in tandem).

5. A drop-centre axle according to Claim 4, in which the said first and second bearings (34, 35) are oppositely orientated roller bearings, in a so-called X configuration, and the said third and fourth bearings (36, 37) are orientated in the same way as the first bearing (34).

6. A drop-centre axle according to any preceding Claim, for a motor vehicle having a propulsion unit coupled by means of a drive shaft to the drive member (7) of the aforesaid differential gear (6) and in which the aforesaid reduction gears (18) are constructed in such a way that the half-shafts (8, 9) of the differential gear (6) are arranged oppositely to the propulsion unit, with regard to the wheel shafts or axles (20).

7. A drop-centre axle according to any preceding Claim, in which each wheel-bearing assembly (16, 17) includes
a tubular support element (40) fixed to the axle casing or box (5),
a shaft or axle (20) mounted for rotation inside the said tubular support element (40);
first and second bearing support means (44, 45) interposed between the said shaft or axle (20) and the tubular support element (40), operable to resist predominantly radial stress and axial stress respectively, and arranged near and far from the wheel (23) respectively,
lubricating fluid sealing means (46) arranged between the end of the said tubular support element (40) and the said shaft or axle (20), transversely outwardly of the said bearing support means (44, 45); and
a wheel-bearing hub (19) removably fixed to an end portion of the said shaft or axle (20) which protrudes from the said tubular support element (40); a brake disc (24) being removably fixed to the wheel-bearing hub (19).

8. A drop-centre axle according to Claim 7, in which the said first bearing support means (44) include a roller bearing configured with cylindrical rollers or convex or barrel rollers.

9. A drop-centre axle according to Claims 7 or 8, in which the said second bearing support means (45) include a double inclined-roller bearing, with a so-called O configuration.

10. A drop-centre axle according to any of the preceding Claims, in which the said drive member (7) includes a bevel pinion (10) coupled to the differential gear (6) and supported for rotation in the axle casing or box (2, 3) by means of a plurality of bearing supports (50, 51) and in which a filter (60) for the lubricating fluid inside the axle (1) is removably inserted into a seat (61) formed in the said axle casing or box (3) near the said bevel pinion (10), the said seat (61) being interposed in a duct (62) for draining the lubricating fluid from the said bearing supports (50, 51).

## Patentansprüche

1. Tiefbettachse (1) im Besonderen für einen Niederflur-Stadtautobus, wobei die Tiefbettachse aufweist:
ein starres Achsgehäuse oder Achskasten (2), das einen rohrförmigen Zwischenteil (3) sowie einen ersten und einen zweiten Achskastenendteil (4, 5) aufweist,
einen ersten und einen zweiten Radlageraufbau (16, 17), von denen jeder an einem Scheibenteil (21) einer entsprechenden Felge (22) eines Rads (23) angebracht werden kann und entsprechende Wellen oder Achsen (20) aufweist, die im ersten bzw. zweiten Achskastenendteil (4, 5) des Achsgehäuses oder Achskastens (2) drehbar aufgenommen werden, und
ein Differentialgetriebe (6), das im Achsgehäuse oder Achskasten (2) neben einem der Achskastenendteile (5) angebracht ist und in Betrieb gesetzt werden kann, um ein Drehmoment von einem Antriebselement (7) zwischen zwei Halbachsen (8, 9) aufzuteilen, von denen jede mit einem entsprechenden Radlageraufbau (16, 17) über entsprechende Reduktionsgetriebe (18) gekuppelt ist, die im einen bzw. im anderen Achskastenendteil (4, 5) des Achsgehäuses oder Achskastens (2) angebracht sind;
wobei die Achse (1) **dadurch gekennzeichnet ist, dass** jedes der Reduktionsgetriebe (18) aufweist:
eine Zwischenwelle (27), die in einer vertikalen Zwischenstellung zwischen der Halbachse (8, 9) des Differentialgetriebes (6) und der Welle oder Achse (20) des Radlageraufbaus (16, 17) angeordnet ist,
eine erste Getriebestufe (28, 29) zwischen einer Halbachse (8, 9) des Differentialgetriebes (6) und der Zwischenwelle (27), und
eine zweite Getriebestufe (30, 31) zwischen der Zwischenwelle (27) und der Welle oder Achse (20) des entsprechenden Radlageraufbaus (16, 17);
wobei jedes Reduktionsgetriebe (18) so aufgebaut und angeordnet ist, dass im Betrieb die Zwischenwelle (27) und die zweite Getriebestufe (30, 31) sowie deren zugeordnete Radseitenlager (32, 33) zumindest teilweise in jenen Raum verlaufen, der zwischen dem Scheibenteil (21) und dem Innenrand (22a) der Felge (22) des entsprechenden Rads (23) gebildet wird.

2. Tiefbettachse gemäß Anspruch 1, wobei die erste Getriebestufe ein Antriebszahnrad (28) aufweist, das von einer Halbachse (8, 9) des Differentialgetriebes (6) getragen wird und im Achsgehäuse oder Achskasten (3, 5) in einem ersten bzw. einem zweiten Lager (34, 35) drehbar gelagert ist, die zum Rad (23) bzw. von diesem weg gerichtet sind, und wobei das Differentialgetriebe (6) einen Planetenradträger (12) aufweist, der im Achsgehäuse oder Achskasten (3, 5) in einem dritten und einem vierten Lager (36, 37) drehbar gelagert ist, die ebenfalls zum Rad (23) bzw. von diesem weg gerichtet sind; wobei sich das zweite und das dritte Lager (35, 36) einander gegenseitig axial durchdringen.

3. Tiefbettachse gemäß Anspruch 2, wobei das zweite Lager (35) den Planetenradträger (12) des Differentialgetriebes (6) axial durchdringt.

4. Tiefbettachse gemäß Anspruch 2 oder 3, wobei das dritte und das vierte Lager (36, 37) Rollenlager sind, die die gleiche Ausrichtung besitzen, das heißt, dass ihre Verjüngungen gleich gerichtet sind (in Tandemausrichtung).

5. Tiefbettachse gemäß Anspruch 4, wobei das erste und das zweite Lager (34, 35) entgegengesetzt gerichtete Rollenlager im sogenannten X-Aufbau sind, und wobei das dritte und das vierte Lager (36, 37) in der selben Richtung wie das erste Lager (34) ausgerichtet sind.

6. Tiefbettachse gemäß irgendeinem der bisherigen Ansprüche für ein Kraftfahrzeug, das eine Antriebseinheit besitzt, die über eine Antriebswelle mit dem Antriebselement (7) des Differentialgetriebes (6) gekuppelt ist, und wobei die Reduktionsgetriebe (18) so aufgebaut sind, dass die Halbachsen (8, 9) des Differentialgetriebes (6) im Hinblick auf die Radwellen oder Radachsen (20) entgegengesetzt zur Antriebseinheit angeordnet sind.

7. Tiefbettachse gemäß irgendeinem der bisherigen Ansprüche, wobei jeder Achslageraufbau (16, 17) aufweist:
ein rohrförmiges Lagerelement (40), das am Achsgehäuse oder Achskasten (5) befestigt ist,
eine Welle oder Achse (20), die im rohrförmigen Lagerelement (40) drehbar aufgenommen wird;
wobei die erste und die zweite Lagereinrichtung (44, 45), die zwischen der Welle oder Achse (20) und dem rohrförmigen Lagerelement (40) liegen, in Betrieb stehen, um vorwiegend radiale bzw. axiale Beanspruchungen aufzunehmen, wobei sie neben dem Rad (23) bzw. von diesem entfernt angeordnet sind;
eine Abdichteinrichtung für das Schmierfluid (46), die zwischen dem Ende des rohrförmigen Lagerelements (40) und der Welle oder Achse (20) außerhalb der Lagereinrichtung (44, 45) quer angeordnet ist; und
eine Radlagernabe (19), die an einem Endteil der Welle oder Achse (20) befestigt ist, der vom rohrförmigen Lagerelement (40) vorspringt; wobei eine Bremsscheibe (24) auf der Radlagernabe (19) abnehmbar befestigt ist.

8. Tiefbettachse gemäß Anspruch 7, wobei der erste Lageraufbau (44) ein Rollenlager aufweist, das mit Zylinderrollen, konvexen Rollen oder Tonnenrollen aufgebaut ist.

9. Tiefbettachse gemäß Anspruch 7 oder 8, wobei die zweite Lagereinrichtung (45) ein doppelt geneigtes Rollenlager im sogenannten O-Aufbau aufweist.

10. Tiefbettachse gemäß irgendeinem der bisherigen Ansprüche, wobei das Antriebselement (7) ein Kegelritzel (10) aufweist, das mit dem Differentialgetriebe (6) gekuppelt und im Achsgehäuse oder Achskasten (2, 3) in einer Vielzahl von Lagern (50, 51) drehbar gelagert ist, und wobei ein Filter (60) für das Schmierfluid innerhalb der Achse (1) abnehmbar in einen Sitz (61) eingesetzt wird, der im Achsgehäuse oder Achskasten (3) in der Nähe des Kegelritzels (10) ausgebildet ist, wobei der Sitz (61) in einem Kanal (62) angeordnet ist, um das Schmierfluid von den Lagern (50, 51) abzuleiten.

## Revendications

1. Un essieu abaissé (1) en particulier pour autobus urbain à plateforme surbaissée, comprenant :
un carter ou boîte d'essieu (2) rigide, comportant une portion tubulaire intermédiaire (3) et des première et seconde portions d'extrémité (4, 5) de la boîte d'essieu,
des premier et second ensembles porte-roue (16, 17), chacun d'eux pouvant être monté sur une portion de disque (21) d'une jante (22) respective d'une roue (23), et comportant des arbres ou essieux respectifs (20) supportés pour rotation respectivement dans ladite première et ladite seconde portion d'extrémité de la boîte d'essieu (4, 5) du carter ou de la boîte d'essieu (2), et
un engrenage différentiel (6) monté dans ledit carter ou boîte d'essieu (2) adjacent à l'une des portions d'extrémité (5) de la boîte d'essieu et pouvant être commandé pour diviser le couple moteur d'un organe d'entraînement (7) entre deux demi-arbres (8, 9), chacun étant accouplé à un ensemble porte-roue correspondant (16, 17) au moyen de réducteurs (18) respectifs montés respectivement dans l'une et l'autre portion d'extrémité de la boîte d'essieu (4, 5) du carter ou de la boîte d'essieu (2) ;
l'essieu (1) étant **caractérisé en ce que** chacun desdits réducteurs (18) comporte :
un arbre intermédiaire (27) agencé dans une position verticalement intermédiaire entre le demi-arbre (8, 9) de l'engrenage différentiel (6) et l'arbre ou l'essieu (20) de l'ensemble porte-roue (16, 17),
un premier étage de réduction (28, 29) entre un demi-arbre (8, 9) de l'engrenage différentiel (6) et l'arbre intermédiaire (27), et
un second étage de réduction (30, 31) entre ledit arbre intermédiaire (27) et l'arbre ou axe (20) de l'ensemble porte-roue (16, 17) correspondant ;
chaque réducteur (18) étant conçu et positionné de telle manière que, en cours d'utilisation, ledit arbre intermédiaire (27) et le second étage de réduction (30, 31) et leurs supports associés (32, 33) côté roue s'étendent au moins en partie , dans le volume défini entre la portion de disque (21) et le bord intérieur (22a) de la jante (22) de la roue correspondante (23). '

2. Essieu abaissé selon la revendication 1, dans lequel le premier étage de réduction comprend un pignon commandé (28) supporté par un demi-arbre (8, 9) de l'engrenage différentiel (6) et supporté en rotation dans le carter ou boîte d'essieu (3, 5) respectivement au moyen de premier et second roulements (34, 35) qui sont respectivement tournés vers et opposés à la roue (23), et dans lequel l'engrenage différentiel (6) comporte un porte-pignons satellites (12) supporté pour rotation dans le carter ou boîte d'essieu (3, 5) au moyen de troisième et quatrième roulements (36, 37) également respectivement tournés vers et opposés à la roue (23) ; lesdits second et troisième roulements (35, 36) s'interpénétrant axialement.

3. Essieu abaissé selon la revendication 2, dans lequel ledit second roulement (35) interpénètre axialement le porte-pignons satellites (12) de l'engrenage différentiel (6).

4. Essieu abaissé selon les revendications 2 ou 3, dans lequel lesdits troisième et quatrième roulements (36, 37) sont des roulements à rouleaux ayant la même orientation, c'est-à-dire que leurs effilements respectifs sont tournés vers la même direction (en tandem).

5. Essieu abaissé selon la revendication 4, dans lequel lesdits premier et second roulements (34, 35) sont des roulements à rouleaux orientés en regard l'un de l'autre, dans une configuration dite en X, et lesdits troisième et quatrième roulements (36, 37) sont orientés de la même manière que le premier roulement (34).

6. Essieu abaissé selon l'une quelconque des revendications précédentes, destiné à un véhicule à moteur équipé d'une unité de propulsion couplée, via un arbre moteur, à l'organe d'entraînement (7) de l'engrenage différentiel (6) précité, et dans lequel les réducteurs (18) précités sont conçus de telle manière que les demi-arbres (8, 9) de l'engrenage différentiel (6) sont disposés en regard de l'unité de propulsion, par rapport aux arbres ou essieux (20) de la roue.

7. Essieu abaissé selon l'une quelconque des revendications précédentes, dans lequel chaque ensemble porte-roue (16, 17) comprend :
un élément support tubulaire (40) fixé sur le carter ou boîte d'essieu (5),
un arbre ou essieu (20) monté en rotation à l'intérieur dudit élément support tubulaire (40) ;
un premier et un second moyen support de roulement (44, 45) interposés entre ledit arbre ou essieu (20) et l'élément support tubulaire (40), pouvant être actionnés pour résister respectivement à la contrainte principalement radiale et à la contrainte axiale, et disposés respectivement à proximité et à distance de la roue (23),
des moyens (46) d'étanchéité du fluide de lubrification disposés entre l'extrémité dudit élément support tubulaire (40) et ledit arbre ou essieu (20), transversalement vers l'extérieur desdits moyens support de roulement (44, 45) ; et
un moyeu porte-roue (19) fixé de manière amovible à une portion d'extrémité dudit arbre ou essieu (20) qui fait saillie dudit élément support tubulaire (40) ; un disque de frein (24) fixé de manière amovible au moyeu porte-roue (19).

8. Essieu abaissé selon la revendication 7, dans lequel ledit premier moyen support de roulement (44) comprend un roulement à rouleaux conçu avec des rouleaux cylindriques ou des rouleaux convexes ou en forme de tonneau.

9. Essieu abaissé selon la revendication 7 ou 8, dans lequel ledit second moyen support de roulement (45) comprend un double roulement à rouleaux inclinés avec une configuration dite en O.

10. Essieu abaissé selon l'une quelconque des revendications précédentes, dans lequel ledit organe d'entraînement (7) comporte un pignon chanfreiné (10) accouplé à l'engrenage différentiel (6) et supporté en rotation dans le carter ou boîte d'essieu (2, 3) au moyen d'une pluralité de supports de roulements (50, 51) et dans lequel un filtre (60) pour le fluide de lubrification à l'intérieur de l'essieu (1) est inséré de manière amovible dans un logement (61) formé dans ledit carter ou boîte d'essieu (3) à proximité dudit pignon chanfreiné (10), ledit logement (61) étant interposé dans un conduit (62) pour évacuer le fluide de lubrification desdits supports de roulements (50, 51).
